# EUROPEAN PATENT SPECIFICATION

(11) **EP 3 496 203 B1**
(45) Date of publication and mention of the grant of the patent: **24.06.2020**
(21) Application number: 19151804.2
(22) Date of filing: 07.03.2012
(51) Int. Cl.: H01M 10/08, H01M 10/12, H01M 4/04, H01M 4/62, H01M 4/22, H01M 4/14

(54) **ENERGY STORAGE DEVICES COMPRISING CARBON-BASED ADDITIVES AND METHODS OF MAKING THEREOF**
ENERGIESPEICHERVORRICHTUNGEN MIT KOHLENSTOFFBASIERTEN ADDITIVEN UND VERFAHREN ZUR HERSTELLUNG DAVON
DISPOSITIFS DE STOCKAGE D'ÉNERGIE COMPRENANT DES ADDITIFS À BASE DE CARBONE ET LEURS PROCÉDÉS DE FABRICATION

(30) Priority: 07.03.2011 US 201161449885 P
(43) Date of publication of application: 12.06.2019
(62) Divisional of application: 12754221.5
(73) Proprietor: Exide Technologies, Alpharetta, GA 30004 (US)
(72) Inventor: JAGANNATHAN, Sudhakar, Alpharetta, GA 30004 (US)
(74) Representative: Patentgruppen A/S

(56) References cited:
- EP-A1- 2 262 042
- WO-A2-2005/090486
- US-A- 5 630 868
- US-A1- 2003 049 528
- US-A1- 2008 107 960
- M. FERNÁNDEZ ET AL: "The use of activated carbon and graphite for the development of lead-acid batteries for hybrid vehicle applications", JOURNAL OF POWER SOURCES, vol. 195, no. 14, 15 July 2010 (2010-07-15), pages 4458-4469, XP055129143, ISSN: 0378-7753, DOI: 10.1016/j.jpowsour.2009.12.131
- SORIA M L ET AL: "New developments on valve-regulated lead-acid batteries for advanced automotive electrical systems", JOURNAL OF POWER SOURCES, ELSEVIER SA, CH, vol. 144, no. 2, 15 June 2005 (2005-06-15) , pages 473-485, XP027756265, ISSN: 0378-7753 [retrieved on 2005-06-15]

## Description

### Technical field

The present invention is directed to energy storage devices, such as lead-acid batteries, and methods of improving the performance thereof, through the incorporation of one or more carbon-based additives.

### Background

The lead-acid battery is the oldest and most popular type of rechargeable energy storage device, dating back to the late 1850's when initially conceived by Raymond Gaston Planté. Despite having a very low energy-to-weight ratio and a low energy-to-volume ratio, the lead-acid battery can supply high-surge currents, allowing the cells to maintain a relatively large power-to-weight ratio. These features, along with their low cost, make lead-acid batteries attractive for use in motor vehicles, which require a high current for starter motors. A lead-acid battery is generally composed of a positive electrode and a negative electrode in an electrolyte bath. Typically, the electrodes are isolated by a porous separator whose primary role is to eliminate all contact between the electrodes while keeping them within a minimal distance (e.g., a few millimeters) of each other. A separator prevents electrode short-circuits by containing dendrites (puncture resistance) and reducing the Pb deposits in the bottom of the battery.

A fully charged, positive lead-acid battery electrode is typically lead dioxide (PbO₂). The negative current collector is lead (Pb) metal and electrolyte is sulfuric acid (H₂SO₄). Sulfuric acid is a strong acid that typically dissociates into ions prior to being added to the battery:

**H₂SO₄** → **H⁺ + HSO₄⁻**

As indicated in the following two half-cell reactions, when this cell discharges, lead metal in the negative plate reacts with sulphuric acid to form lead sulphate (PbSO₄), which is then deposited on the surface of the negative plate.

**Pb(*s*) + HSO₄⁻ (*aq*) → PbSO₄ (*s*) + H ⁺(*aq*) + 2e⁻** (negative-plate half reaction)

**PbO₂ (*s*)** + **3H ⁺(*aq*)** + **HSO₄⁻ (*aq*)** + **2e**⁻ **→ PbSO₄ (*s*)** + **2H₂O** (positive-plate half reaction)

During the discharge operation, acid is consumed and water is produced; during the charge operation, water is consumed and acid is produced. Adding the two discharge half-cell reactions yields the full-cell discharge reaction:

**Pb** + **PbO₂** + **2H2SO₄** → **2PbSO₄** + **2H₂O** (full-cell discharge equation)

When the lead-acid battery is under load, an electric field in the electrolyte causes negative ions (in this case bisulfate) to drift toward the negative plate. The negative ion is consumed by reacting with the plate. The reaction also produces a positive ion (proton) that drifts away under the influence of the field, leaving two electrons behind in the plate to be delivered to the terminal.

Upon recharging the battery, PbSO₄ is converted back to Pb by dissolving lead sulphate crystals (PbSO₄) into the electrolyte. Adding the two charge half-cell reactions yields the full-cell charge reaction.

**PbSO₄(*s*) + H ⁺(*aq*) + 2e**⁻ **→ Pb (*s*)** + **HSO₄⁻ (*aq*)** (negative-plate half reaction)

**PbSO₄(*s*) + 2H₂O → PbO₂ (*s*) + 3H ⁺(*aq*) + HSO₄⁻ (*aq*) + 2e**⁻ (positive-plate half reaction)

**PbSO₄(s) + H ⁺(*aq*) + 2e⁻ → Pb (*s*) + HSO₄⁻ (*aq*)** (full-cell charge equation)

When the battery repeatedly cycles between charging and discharging, the efficiency of dissolution of PbSO₄ and conversion to Pb metal decreases over time. As a result, the amount of PbSO₄ continues to increase on the surface of negative plate and over time forms an impermeable layer of PbSO₄, thus restricting access of electrolyte to the electrode.

Carbon-based additives with high surface area, good electronic conductivity, high purity, and good wetting properties are being increasingly used to mitigate lead sulphate (PbSO₄) accumulation in negative active material (NAM).

A variety of carbon materials are commercially available with varying structure, morphology, purity level, particle size, surface areas, pore sizes, manufacturing methods, and functional groups. The present inventor has found that the addition of certain carbon-based additives to negative active material (NAM) of VRLA batteries increases electronic conductivity and mechanical integrity of the NAM, thereby achieving a number of advantageous properties. For example, the present inventor has found that the addition of certain carbon-based additives increases the surface area of the NAM thereby reducing the current density, which may result in negative plate potentials below the critical value for H₂ evolution. Additionally, the carbon-based additives studied by the present inventors results in pathways of conductive bridges around the PbSO₄ crystallites to shorten the conductive path and to improve the charge efficiency. Carbon may restrict the pore size (volume) into which the PbSO₄ crystallites could grow. Carbon particles may serve as potential sites for the nucleation of PbSO₄ crystallites. Carbon may improve electrolyte access to the interior of the plate. The presence of carbon reduces parasitic reactions like hydrogen production and enhances non-Faradaic or double layer capacitance. Although several benefits of carbon addition are known, the exact mechanism for the increase in charge acceptance and other advantages are not completely understood.

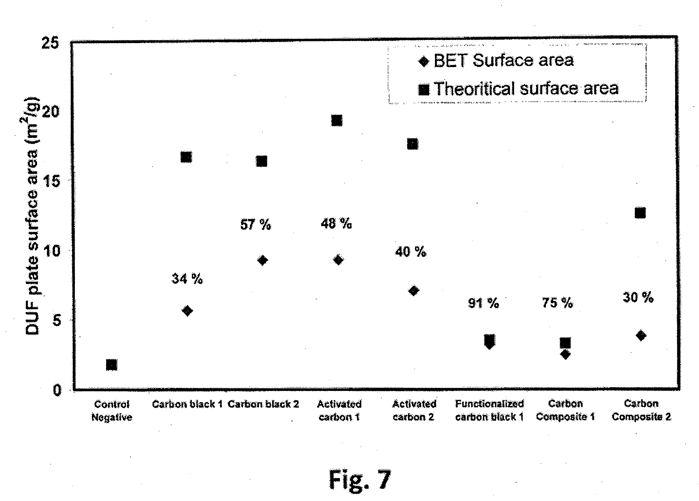

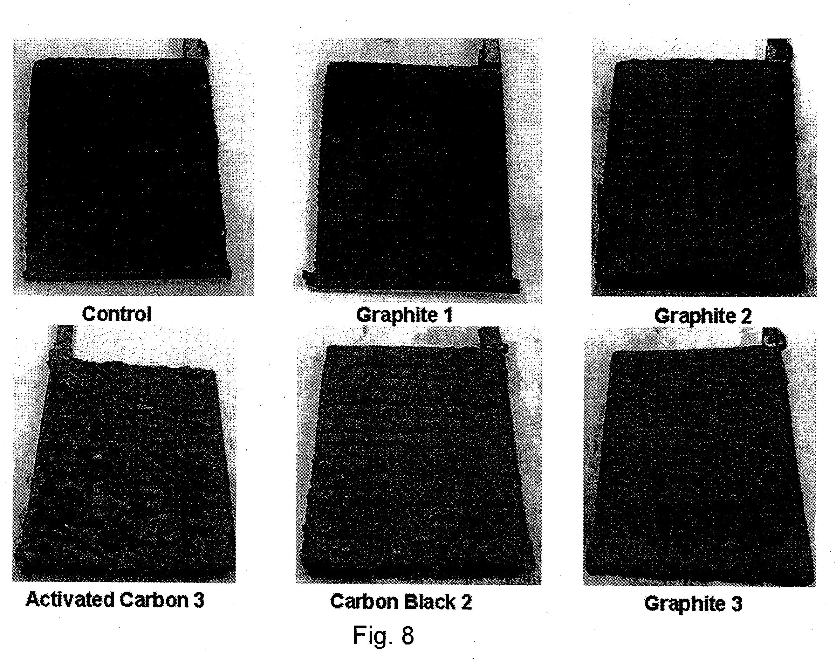

M. Fernandez in The Journal of Power Sources, vol. 195, no. 14, 15 July 2010, pages 4458-4469, discloses a VRLA battery and a carbon active comprising a combination of graphite and conductive carbon black (3. Part 2. Tests with low SSA carbon and graphites, paragraph 1, Tables 4 and 5, Figures 7 and 8), wherein the graphite has a specific surface area of 24 m²/g and 9 the conductive carbon black has a specific surface area of 80 m²/g.

### Summary of the invention

The present invention is defined in the appended claims.

### Description of the drawings

These and other advantages of the present invention will be readily understood with reference to the following specifications and attached drawings wherein:
Figure 1 is a diagram of an example prismatic lead-acid battery capable of carrying out the present invention;
Figure 2 is a diagram of an example spiral-wound lead-acid battery capable of carrying out the present invention; and
Figure 3 is a diagram demonstrating a method of preparing a carbon-additive NAM paste and battery electrode.
Figure 4a is a chart depicting a standard paste mix recipe for control positive, control negative, and carbon containing negative plates;
Figure 4b is a chart depicting a standard formation profile for a 3 positive 2 negative 2V test cell;
Figure 5 is a chart depicting various carbon-based additives with varying surface area, structure, pore size distribution, particle size, functional groups, composite particles, and their BET surface areas
Figure 6 is a chart depicting active material apparent density and percent lead sulphate content in carbon containing negative dry unformed plate;
Figure 7 is a graph representing experimental and theoretical surface areas for dry, unformed negative plates for control as well as different carbon containing plates;
Figure 8 comprises images showing the quality of adhesion of the negative paste to grids after formation for control, as well as for a negative mix with 6 wt% carbon loading.
Figure 9 is a bar graph representing enhancement in discharge capacity using an embodiment of the present invention.
Figure 10 is a bar graph representing enhancement in static charge acceptance using an embodiment of the present invention.
Figure 11 is a bar graph representing enhancement in discharge power using an embodiment of the present invention.
Figure 12 is a bar graph representing enhancement in charge power using an embodiment of the present invention.
Figure 13 is a bar graph representing enhancement in discharge capacity using an embodiment of the present invention.
Figure 14 is a bar graph representing enhancement in static charge acceptance using an embodiment of the present invention.
Figure 15 is a bar graph representing enhancement in discharge power using an embodiment of the present invention.
Figure 16 is a bar graph representing enhancement in charge power using an embodiment of the present invention.
Figure 17 is a bar graph representing enhancement in discharge capacity using an embodiment of the present invention.
Figure 18 is a bar graph representing enhancement in static charge acceptance using an embodiment of the present invention.
Figure 19 is a bar graph representing enhancement in discharge power using an embodiment of the present invention.
Figure 20 is a bar graph representing enhancement in charge power using an embodiment of the present invention.
Figure 21 comprises images showing cross sectional images of: a control negative plate after formation and after cycle life test; carbon black 2 containing negative plate after cycle life test; and activated carbon 1 containing negative plate after cycle life test.
Figure 22 is a graph representing changes in paste density and paste penetration, with varying amounts of water content for pure leady oxide, a standard negative mix, and negative mix with 6 wt% carbon loading;

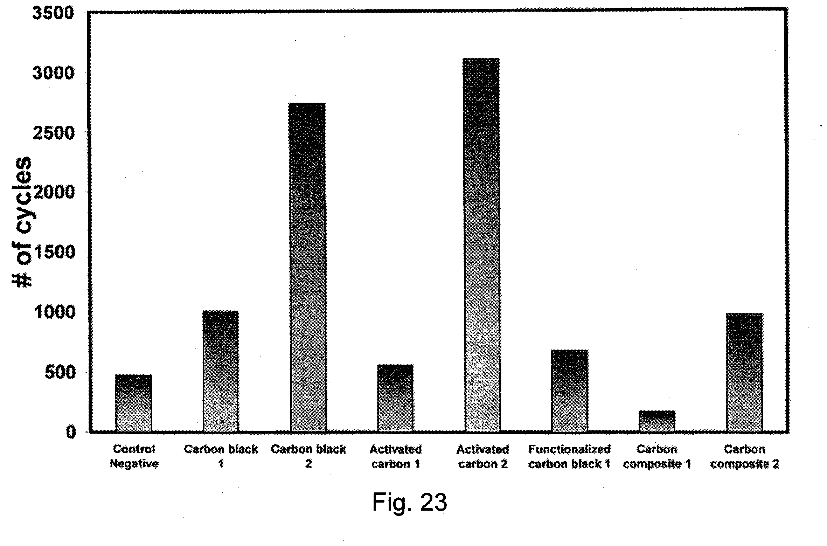

Figure 23 is a graph representing changes in high rate partial state of charge cycle life test performed at 60 % SoC for control as well s carbon containing cells;

### Detailed description

The present invention is directed to energy storage devices comprising an electrode comprising lead, an electrode comprising lead dioxide, a separator between the electrode comprising lead and the electrode comprising lead dioxide, an aqueous electrolyte solution containing sulfuric acid, a first carbon-based additive and a second carbon-based additive. In some embodiments, a first carbon-based additive suitable for use in the present invention comprises a predetermined structure, a surface area, a particle size distribution, a pore volume distribution, a functional group, a composite component, or combinations thereof. In some embodiments a second carbon-based additive suitable for use in the present invention comprises a predetermined structure, a surface area, a particle size distribution, a pore volume distribution, a functional group, a composite component, or combinations thereof.

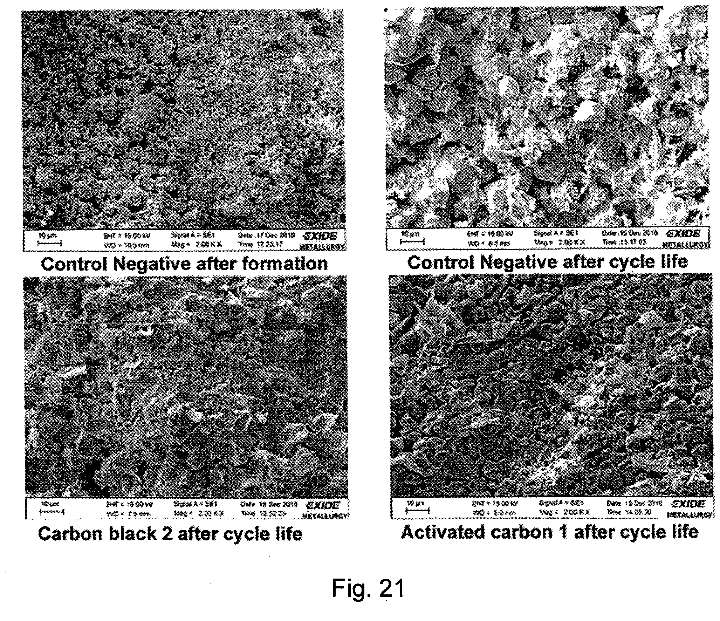

In some embodiments the present invention is directed to an energy storage device. In some embodiments, an energy storage device includes a lead-acid battery. For example, in some embodiments, a lead-acid battery includes, but is not limited to a valve regulated lead-acid battery, a flooded battery and a gel battery. In some embodiments, the present invention is directed to the addition of certain carbon-based additives to an energy storage device to enhance one or more properties of the device, including but not limited to discharge capacity, static charge acceptance, charge power, discharge power, life cycle, repeated reserve capacity, stand loss, cold cranking amps, deep discharge test, corrosion resistance test, reserve capacity, water consumption test, vibration test or combinations thereof. While not being bound to any particular theory, introducing certain carbon-based additives to an energy storage device enhance the aforementioned properties primarily through nucleation of lead sulphate crystals and forming a conductive network around the negative active material particles. Addition of certain carbon-based additives to a negative electrode of a lead-acid battery increases electronic conductivity of the paste mix, which in turn, increases the power density of the battery to allow charge and discharge at higher current rates. In some embodiments, certain carbon-based additives increase the surface area of the NAM, thereby reducing the current density, which may result in negative plate potentials below the critical value for H₂ evolution. When the H₂ evolution is reduced, the batteries are able to last for longer cycles in various life cycle tests. Additionally, increasing the surface area of the NAM with certain carbon-based additives also translates to higher surface area available for charge storage or higher charge acceptance. In some embodiments, certain carbon-based additives may serve as potential sites for the nucleation of PbSO₄ crystallites. This nucleating effect of carbon results in many small PbSO₄ crystals in place of larger crystals observed in traditional lead-acid batteries. While not being bound to one particular theory, the smaller PbSO₄ crystals are more readily dissolved in acid while charging in typical charge-discharge cycle life tests. For example, as seen in Figure 21, PbSO₄ crystals are markedly smaller in active material containing certain carbon-based additives suitable for use in the present invention. Hence, these batteries last for longer cycles in various life cycle tests. In some embodiments, the introduction of certain carbon-based additives into the NAM also improves electrolyte access to the interior of the plate which improves the effective paste utilization and enhanced discharge capacities.

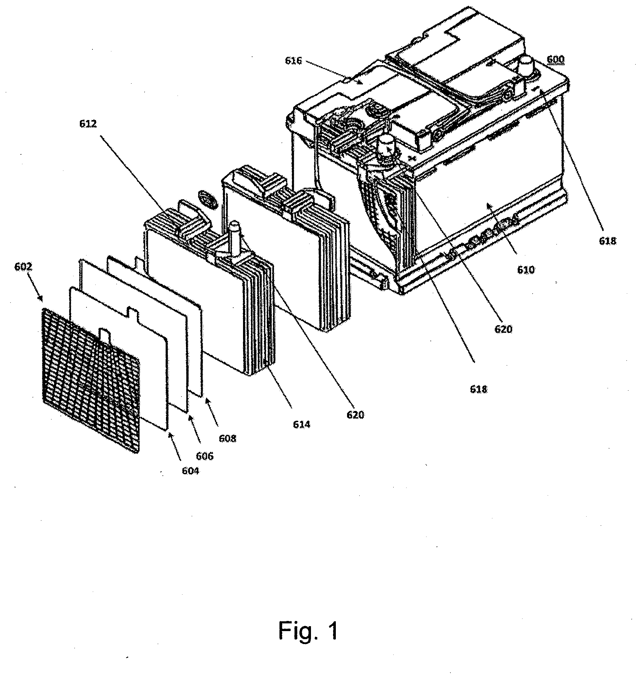

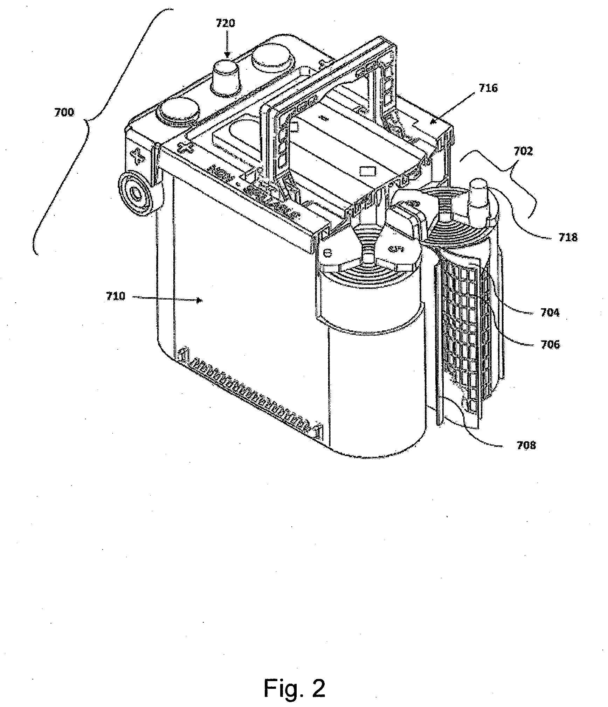

In one embodiment the present invention is directed to an energy storage device such as a prismatic lead-acid battery as depicted in Figure 1. According to Fig. 1, lead-acid battery 600 is configured to be used with one or more of the carbon-based additives according to the present invention. As seen in the diagram, the lead-acid battery is comprised of a lower housing 610 and a lid 616. The cavity formed by the lower housing 610 and a lid 616 houses a series of plates which collectively form a positive plate pack 612 (i.e., positive electrode) and a negative plate pack 614 (i.e., negative electrode). The positive and negative electrodes are submerged in an electrolyte bath within the housing. Electrode plates are isolated from one another by a porous separator 606 whose primary role is to eliminate all contact between the positive plates 604 and negative plates 608 while keeping them within a minimal distance (e.g., a few millimeters) of each other. The positive plate pack 612 and negative plate pack 614 each have an electrically connective bar traveling perpendicular to the plate direction that causes all positive plates to be electrically coupled and negative plates to be electrically coupled, typically by a tab on each plate. Electrically coupled to each connective bar is a connection post or terminal (i.e., positive 620 and negative post 618). According to the present invention, certain carbon-based additives are provided to the paste, as discussed above, for example, being pressed in to the openings of grid plates 602, which, in certain embodiments, may be slightly tapered on each side to better retain the paste. Although a prismatic AGM lead-acid battery is depicted, certain carbon-based additives suitable for use in the present invention may be used with any lead-acid battery, including, for example, flooded/wet cells and/or gel cells. As seen in Figure 2, the battery shape need not be prismatic, it may be cylindrical, or a series of cylindrical cells arranged in various configurations (e.g., a six-pack or an off-set six-pack).

Figure 2 illustrates a spiral-wound lead-acid battery 700 configured to be used with a certain carbon-based additives. As in the prismatic lead-acid battery 600, a spiral-wound lead-acid battery 700 is comprised of a lower housing 710 and a lid 716. The cavity formed by the lower housing 710 and a lid 716 house one or more tightly compressed cells 702. Each tightly compressed cell 702 has a positive electrode sheet 704, negative electrode sheet 708, and a separator 706 (e.g., an absorbent glass mat (AGM) separator). Batteries containing AGM separators use thin, sponge-like, absorbent glass mat separators 706 that absorb all liquid electrolytes while isolating the electrode sheets. A carbon containing paste may be prepared and then be applied to a lead alloy grid that may be cured at a high temperature and humidity. In cylindrical cells, positive and negative plates are rolled with a separator and/or pasting papers into spiral cells prior to curing. Once cured, the plates are further dried at a higher temperature and assembled in the battery casing. Respective gravity acid may be used to fill the battery casing. Batteries are then formed using an optimized carbon batteries formation process.

According to some embodiments of the present invention, a carbon-based additive suitable for use in the present invention comprises one or more physical properties including, but not limited to carbon structure, surface area, particle size, pore width distribution, pore volume distribution, surface functionality, composite component content, or combinations thereof. As described above, according to some embodiments, the present invention relates to energy storage devices comprising a first and second carbon-based additive.

In some embodiments, a first carbon-based additive comprises a predetermined structure. In some embodiments, the first carbon-based additive is a high or low structure carbon-based additive. For example, a primary particle of carbon black is a solid sphere or sphere-like of pyrolyzed carbon precursor, typically an oil droplet. When a surface charge is introduced into the primary particles, they will start connecting on to each other, forming a coupled structure. Higher surface charges will result in longer coupled carbon blacks or high structure carbon blacks. Lower surface charges will result in shorter coupled carbon blacks or low structure carbon blacks. In some embodiments, a first carbon-based additive comprises an oil absorption number from 30 ml/100 g to 500 ml/100 g, 100 ml/100 g to 300 ml/100 g, or 125 ml/100 g to 175 ml/100 g. In some embodiments, a first carbon-based additive comprises a low structure, wherein the first carbon-based additive has an oil absorption number less than 300 ml/100 g, less than 250 ml/100 g, less than 100 ml/100 g, or less than 50 ml/100 g. In other embodiments a first carbon-based additive comprises a high structure, wherein the first carbon-based additive has an oil absorption number greater than 300 ml/100g, greater than 350 ml/100 g, 300 ml/100 g to 400 ml/100 g, greater than 400 ml/100 g, or greater than 500 ml/100 g. While not being bound to one particular theory, certain carbon-based additives having low structure disperse more effectively in the NAM than higher structured carbon, resulting in a more homogeneous negative paste mix. Achieving a more homogenous negative paste mix provides for enhanced properties at a much lower carbon loading, thereby reducing the amount of material required to achieve a desired energy output.

A carbon-based additive suitable for use in the present invention comprises a surface area from 100 m²/g to 2000 m²/g. In some embodiments a carbon-based additive suitable for use in the present invention comprises a surface area from 100 m²/g to 1500 m²/g, 150 m²/g to 1000 m²/g, 150 m²/g to 500 m²/g, or 150 m²/g to 350 m²/g. In other embodiments a carbon-based additive suitable for use in the present invention comprises a surface area from 1000 m²/g to 2000 m²/g, 1200 m²/g to 1800 m²/g, or 1300 m²/g to 1600 m²/g. In some embodiments, the surface areas of a first carbon-based additive carbon may be 100 m²/g to 2000 m²/g, more preferably, 500 m²/g to 1800 m²/g, even more preferably 1300 m²/g to 1600 m²/g, and and most preferably 1400 m²/g to 1500 m²/g. The second carbon-based additive suitable for use in the present invention comprises a surface area from 3 m²/g to 50 m²/g, from 5 m²/g to 30 m²/g, or from 10 m²/g 25 m²/g. While not being bound by any particular theory, inclusiong of carbon-based additives increases the surface arae of the NAM, resulting in negative plate potentials below the critical value for H₂ evolution. When the H₂ evolution is reduced, the batteries are able to last for longer cycles in various life cycle tests. Additionally, increased NAM surface area through the inclusion of certain carbon-based additives also translates to higher surface area available for charge storage or higher charge acceptance.

In some embodiments, a carbon-based additive comprises a pore width distribution, pore volume distribution, or combinations thereof. As used herein, the term "pore width distribution" refers to the range of pore widths of the pores in the carbon-based additive. For example, in some embodiments, a carbon-based additive suitable for use in the present invention comprises a pore width distribution from 0 Å to 20 Å, 20 Å to 8000 Å, or a mixture of both. According to the invention, a first carbon-based additive is classified as both microporous and mesoporous. As used herein, "microporous" refers to a carbon-based additive having a pore width of less than 2 nm. As used herein, "mesoporous" refers to a carbon-based additive having a pore width of 2 nm to 50 nm. In some embodiments, the pore size distribution for a carbon-based additive suitable for use in the present invention comprises a pore size from 0 nm to 2 nm, 2 nm to 800 nm, or a mixture of 0 nm to 2 nm and 2 nm to 800 nm. In some embodiments, the pore volume of a carbon-based additive suitable for use with the present invention is from 0.01 cc/g to 3.0 cc/g, from 0.5 cc/g to 2.5 cc/g, or 1.0 cc/g to 2.0 cc/g. In some embodiments, the ratio of micro pore volume to total pore volume as well as ratio of meso to total pore volume of a carbon-based additive suitable for use with the present invention is from 0.01 to 0.99, from 0.3 to 0.7, or from 0.4 to 0.6. While not being bound to one particular theory, inclusion of carbon-based additives having pore widths slightly larger than an electrolyte ion size, will provide a battery that charges and discharges more effectively. Additionally, a larger pore width enables the electrolyte ions to freely move in and out of the electrode pores with least resistance, resulting in improved performance in power density tests as well as high rate discharges.

As used herein, the term "pore volume distribution" refers to the range of pore volumes of the pores in the carbon-based additive. For example, in some embodiments, a first carbon-based additive suitable for use in the present invention comprises a pore volume distribution from 0.01 cc/g to 3.0 cc/g, 0.5 cc/g, to 2.5 cc/g, or 1.0 cc/g, to 2.0 cc/g,. In some embodiments, a first carbon-based additive suitable for use in the present invention may be classified as microporous, mesoporous, or combinations thereof. While not being bound to one particular theory, introducing a carbon-based additive having an increased pore volume to the NAM reduces the apparent density of the NAM which in turn reduces the total battery weight. Additionally, increased pore volume helps increase total electrolyte volumes in the electrodes, resulting in a higher discharge capacity.

According to the invention, the carbon-based additive comprises a surface functionality, -SO₃ or COOH. While not being bound by any particular theory, inclusion of certain carbon-based additives having functionalized groups that are compatible with paste mix additives can improve interaction with the matrix material (lead in the case of a lead-acid battery). These increased interactions, improve the dispersion of carbon-based additive in the matrix during the processing stage, and helps achieve uniform properties throughout the cross-section. There may also be some functional reasons for attaching a specific group to carbon in lead-acid battery as well as other applications. For example, attachment of functional groups that undergo electrochemical reactions in the operating window of energy storage device, can improve the discharge capacity of the energy storage device. Carbon-based additives having functional groups also improve compatibility of the carbon-based additive and the active material. In some embodiments, the amount of functional group attached to a carbon-based additive may be 0.1 wt% to 95 wt%, 1 wt% to 50 %, or 5 wt% to 25 wt%. Carbon-based additives having functional groups enhance the interaction between the carbon particle and the lead oxide matrix, which helps the carbon-based additive to disperse effectively in the NAM than with carbons with no functional groups attached, resulting in more homogeneous negative paste mix and the property improvements at a much lower carbon loading.

In some embodiments, the present invention is directed to an energy storage device such as a gel battery. As used herein, "gel battery" refers to a class of low maintenance valve regulated lead-acid batteries which uses sulfuric acid electrolyte combined with silica particles. Silica with higher hydrophilic surface functionality is dispersed in sulphuric acid to form a gel which acts as an electrolyte reservoir for longer cycle life. Accordingly, in some embodiments, a first carbon-based additive comprises a composite component, including but not limited to silica, zeolite. In some embodiments, a carbon-based additive suitable for use with the present invention comprises from 0.1 wt% to 95 wt%, from 10 wt% to 70 wt%, or from 30 wt% to 60 wt%.composite component. The amount of composite component included in the carbon-based additive may comprise 0.5 % to 6 % by weight of the mixture, from 1 % to 4 %, or from 1.5 % to 3 %. While not being bound to any particular theory, certain carbon-based additives comprising a composite component, if dispersed in negative paste, can provide the benefit of higher electronic conductivity from the carbon part of the particle for higher charge acceptance, and the gel zones act as a local reservoir in negative plates allowing for longer cycle life. A carbon-based additive having a composite component has proven to improve the electronic conductivity of the negative plates and leads to increased nucleation of PbSO₄ crystals. For example, in some embodiments an energy storage device comprising carbon-based additives having silica particles have proven to retain acid over an extended time, due to their hydrophilic functionality, resulting in higher discharge capacities as well as longer cycle life. In other embodiments, an energy storage device comprising carbon-based additive having zeolite particles improves the cycle life even further by restricting the growth of PbSO₄ crystals while simultaneously providing an increased supply of sulphuric acid to the plate.

In some embodiments, the present invention comprises an energy storage device having a one carbon-based additives. In other embodiments, the present invention comprises an energy storage device comprising one or more carbon-based additives. For example, in some embodiments, an energy storage device of the present invention comprises a first carbon-based additive and a second carbon-based additive. In some embodiments a first carbon-based additive has a physical property, such as those disclosed above, that may be the same, or different, from a physical property of the second carbon-based additive. In some embodiments, inclusion of a first carbon-based additive provides for an enhanced energy output characteristic such as those described above, wherein a second carbon-based additive provides for a desired physical result of a component part of an energy storage device including, but not limited to reduced paste shedding.

Examples of commercially available carbon-based additives include but are not limited to NC2-1D, NC2-3, PC2-3, NC2-1E, M2-13, M2-23, M2-33 materials available from Energ2 Inc, Norit Azo available from Norit Netherland BV, WV E 105 available from Mead Westvaco.Vulcan XC-72, Regal 300R PBX 51 or BP 2000 available from Cabot Corporation, Printex L6, Printex XE - 2B available from Evonik industries, Raven 2500, Raven 3500 available from Columbian Chemicals, ABG 1010, LBG 8004, 2939 APH from Superior graphite, MX 6, MX 15, HSAG 300 from Timcal Graphite and Carbon.

As discussed above, certain carbon-based additives may be introduced into the paste prior to assembly of the energy storage device. Such a paste may be prepared using one of many known processes. For example, US Patent 6,531,248 to Zguris et al. discusses a number of known procedures for preparing paste and applying paste to an electrode. For example, a paste may be prepared by mixing sulfuric acid, water, and various additives (e.g., Carbon and/or other expanders) where paste mixing is controlled by adding or reducing fluids (e.g., H₂O, H₂SO₄, tetrabasic lead sulfate, etc.) to achieve a desired paste density. The paste density may be measured using a cup with a hemispherical cavity, penetrometer (a device often used to test the strength of soil) and/or other density measurement device. A number of factors can affect paste density, including, for example, the total amount of water and acid used in the paste, the specific identity of the oxide or oxides used, and the type of mixer used. Zguris also discusses a number of methods for applying a paste to a battery electrode. For example, a "hydroset" cure involves subjecting pasted plates to a temperature (e.g., between 25 and 40° C) for 1 to 3 days. During the curing step, the lead content of the active material is reduced by gradual oxidation from about 10 to less than 3 weight percent. Furthermore, the water (i.e., about 50 volume percentage) is evaporated.

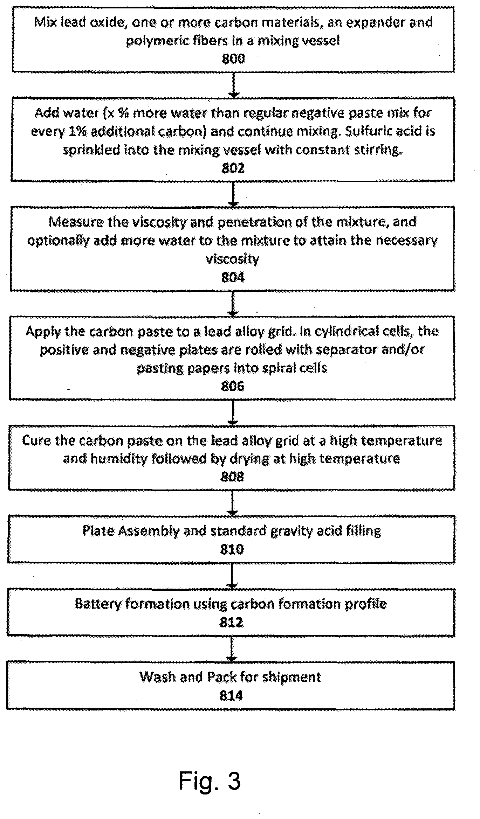

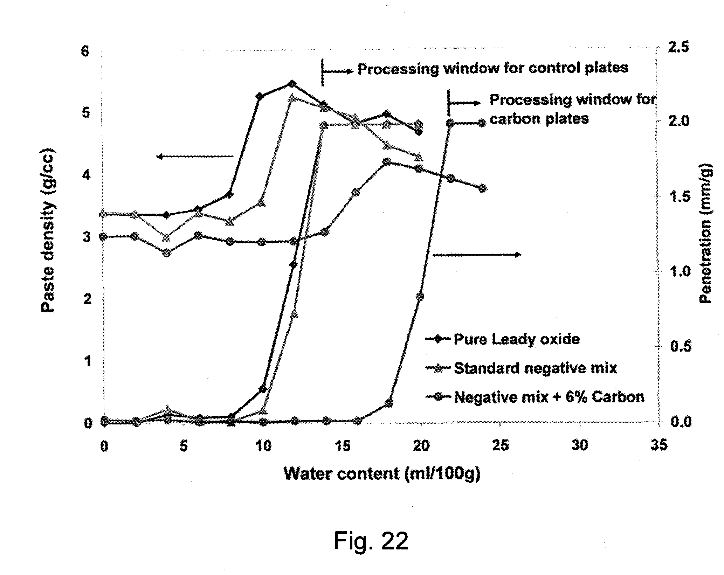

Figure 3 depicts a flow chart demonstrating a method of preparing a paste comprising certain carbon-based additives and applying it to a battery electrode. To form the paste, paste ingredients (e.g., Carbon, graphite, carbon black, lignin derivatives, BaSO₄, H₂SO₄, H₂O, etc..) are mixed 800 until a desired density (e.g., 4.0 g/cc to 4.3 g/cc) is determined. The carbon containing paste may be prepared by adding lead oxide, one or more carbon expanders and polymeric fibers to a mixing vessel, mixing the materials for 5-10 minutes using a paddle type mixer (800). Water may be added (x % more water than regular negative paste mix for every 1% additional carbon) and continue mixing. A carbon paste (e.g., a paste containing Advance Graphite) would preferably contain 0.5 - 6% carbon-based additive by weight with a more preferred range of about 1 - 4 % or 1 - 3%. However, a most preferred carbon paste would contain about 2 - 3% carbon-based additive by weight. As demonstrated in Figure 22 changes in paste density and paste penetration, with varying amounts of water content for pure leady oxide, a standard negative mix, and negative mix with 6 wt% carbon loading.

Once the carbon containing paste has been prepared, sulfuric acid may be sprinkled into the mixing vessel with constant stirring and mixing may be continued for additional 5 - 10 minutes (802). Viscosity and penetration of the resulting carbon paste may be measured and water may be added to the paste to attain necessary viscosity (804). In some embodiments, a paste containing one or more of the carbon-based additives disclosed below may be prepared having an optimum viscosity (260 - 310 grams/cubic inch) and penetration (38 - 50 mm/10). This carbon containing paste may then be applied to lead alloy grid (806) followed by curing at high temperature and humidity (808). In cylindrical cells, the positive and negative plates are rolled with a separator and/or pasting papers into spiral cells before curing. Cured plates are further dried at higher temperature. Dried plates are assembled in the battery casing and respective gravity acid is filled into the battery casing (810). Batteries are then formed using an optimized carbon batteries formation profile (812). The formation process may include, for example, a series of constant current or constant voltage charging steps performed on a battery after acid filling to convert lead oxide to lead dioxide in positive plate and lead oxide to metallic lead in negative plate. In general, carbon containing negative plates have lower active material (lead oxide) compared to control plates. Thus, the formation process (i.e., profile) for carbon containing plates is typically shorter.

In some embodiments, the present invention is directed to an energy storage device comprising an electrode comprising lead; an electrode comprising lead dioxide; a separator between the electrode comprising lead and the electrode comprising lead dioxide; an aqueous electrolyte solution containing sulfuric acid; a first carbon-based additive having one or more of the properties described above and a second carbon-based additive having one or more properties described above, wherein the first and second carbon-based additives enhance the discharge capacity, static charge acceptance, charge power, and discharge power of the energy storage device.

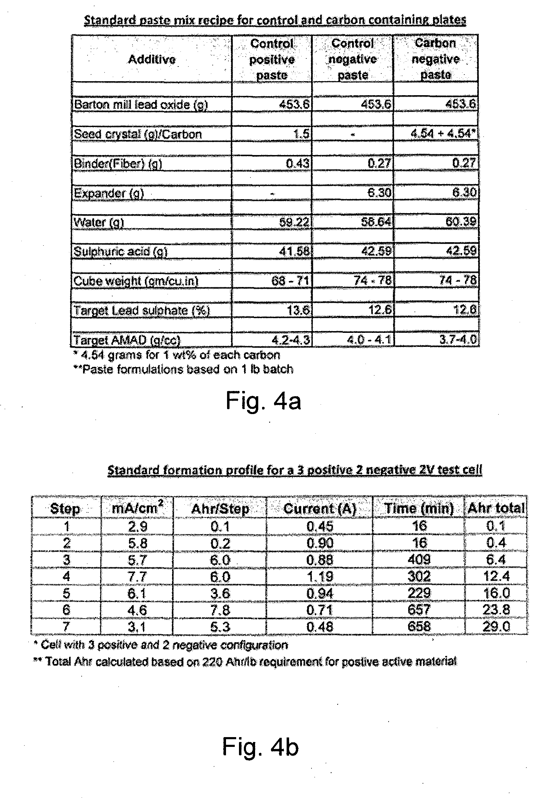

As used herein, comparative terms such as "enhance" "greater than" "less than" etc. describe the relationship between an energy storage devices of the present invention and a standard, reference or control energy storage device. As used herein, the terms "standard" "reference" or "control" refer to an energy storage device, or component part thereof, comprising substantially the same components, arranged in substantially the same manner, as an energy storage device of the present invention, but lacking the first and second carbon-based additives. For example, if a first energy storage device comprising a first and second carbon-based additive comprises a discharge capacity X% greater than standard, the term "standard" refers to an energy storage device comprising substantially similar component parts, arranged in substantially similar manner as the first energy storage device, but lacking the first and second carbon-based additives of the first energy storage device. For example, Figure 4a depicts a standard paste mixing recipe for both a negative control/reference paste comprising substantially similar components as a negative paste comprising a carbon-based additive suitable with the present invention.

In some embodiments, the present invention is directed to an energy storage device having an enhanced discharge capacity compared to standard. As used herein, the discharge capacity of an energy storage device is the ability of the device to deliver power to equipment at various hour rates. The discharge capacity is calculated by multiplying the rate at which the energy storage device is discharged and the discharge time. Thus, an increase in discharge capacity provides for longer lasting energy storage devices or devices that discharge at higher rates. In some embodiments, an energy storage device of the present invention comprises a lead-acid battery having a discharge capacity from 2% to 20%, 5% to 15%, or 7% to 10% greater than standard at a C/20 discharge rate for 20 hours. While not being bound to any particular theory, an enhanced discharge capacity is due to the enhanced paste utilization through the incorporation of one or more carbon-based additives described above.

In some embodiments, the present invention is directed to an energy storage device having an enhanced static charge acceptance compared to standard. The static charge acceptance of an energy storage device is ability of the device to accept charge at low temperature when fully discharged or at partially discharged state. Thus, an increase in static charge acceptance improves the ability of the device to accept charges at partial state of charge conditions which would otherwise be wasted as heat. Enhanced static charge acceptance also provides for quicker recharge of the device. In some embodiments, the energy storage device comprises a lead-acid battery having a static charge acceptance from 40 % to 190 %, 50% to 150%, or 75% to 100% greater than standard when charged at 2.4V/Cell for 10 min at -17.8 °C (0 °F).

In some embodiments, the present invention is directed to an energy storage device having an enhanced charge power compared to standard. The charge power of an energy storage device is ability of the device to accept high pulse charges at various partial state of charge, thus, an increase in charge power improves the ability of a device to accept charges at partial state of charge conditions which would otherwise be wasted as heat. In some embodiments, the energy storage device comprises a lead-acid battery having a charge power from 75% to 100 %, 100% to 175%, or 125% to 150%, or 75% to 200% greater than standard at 40% to 80%, 50% to 70%, or 60% to 70%, state of charge. As used herein, "state of charge" refers to available device capacity expressed as a percentage of maximum device capacity or rated device capacity.

In some embodiments, the present invention is directed to an energy storage device having an enhanced discharge power compared to standard. The discharge power of an energy storage device is ability of a device to discharge the entire battery capacity within a specified time. For example, wherein the energy storage device is a lead-acid car battery, an increase in discharge power determines the degree of achievable electrical boosting during the acceleration period the vehicle, while the charge acceptance affects the degree of utilization of the regenerative braking energy during the deceleration step. In some embodiments, the energy storage device comprises a lead-acid battery having a discharge power from 10% to 500%, 20% to 400%, 50% to 300%, or 100% to 200% greater than standard at 40% to 100%, 50% to 90%, or 60% to 80% state of charge.

In some embodiments, the present invention is directed to an energy storage device comprising a dry unformed negative plate surface area of 2 m²/g to 10 m²/g. As used herein, the term "dry unformed plate surface area" refers to the surface area of cured negative plate before the formation process. An increased surface area with carbon addition increases the ability of the electrode to accept more charge. Additionally an increased dry unformed plate surface area results in increased access points between the electrode and electrolyte, resulting in increases device cycle life.

In some embodiments, the present invention is directed to an energy storage device comprising a lead-acid battery providing from 20% to 500%, from 50% to 400%, from 70% to 300%, from 100% to 200% or from 100% to 500% greater cycles than standard in a HRPSoC cycle life test. As used herein, the term "HRPSoC cycle life" refers to a high rate partial state of charge cycle life test performed to replicate the actual use of an energy storage device. The device is discharged initially to a partial state of charge and cycled using a given charge-discharge cycle. The end of the test is reached when the device reaches the minimum voltage When energy storage devices, such as batteries are operated under conditions of HRPSoC, a major cause for failure in a negative plate is progressive accumulation of PbSO₄. The PbSO₄ accumulation restricts electrolyte access to the electrode, reduces charge acceptance, and diminishes the effective surface area of the available active mass which in turn reduces the ability of the cells to deliver power and energy. While not being bound to any particular theory, the introduction of certain carbon-based additives, as described above, mitigate PbSO₄ accumulation in NAM, thereby providing for enhanced performance.

The present inventors have discovered that incorporating certain carbon-based additives into active material of energy storage devices may increase the amount of paste shedding experienced during operation. As used herein, the term "paste shedding" refers to the loss of paste from a plate during the operation of the device. In some embodiments, the present invention is directed to a method of reducing shedding of a negative active material in a lead-acid battery comprising the steps of providing a negative active material suitable for use in a lead-acid battery; adding to the negative active material from 0.5 %wt. to 3 %wt. a carbon-based additive having a surface area from 20 m²/g to 2000 m²/g or from 5 m²/g to 30 m²/g, applying the resulting paste to a cell; curing the paste; and over forming the cell assembly using a constant current; wherein the paste is retained, or shows no disfiguration for 100% to 500%, from 100% to 400%, or from 200% to 300% longer than high surface area carbons. While not being bound to any particular theory, a first carbon-based additive is incorporated into a paste mix to provide enhanced performance to an energy storage device, and a second carbon-based additive, such as described above, increases the duration of the performance benefits through reduction of paste shedding. In some embodiments a carbon-based additive suitable for reducing paste shedding in an energy storage device is MX 15, NC2-3, PBX 51 HSAG 300, or ABG 1010 as disclosed above.

### Examples

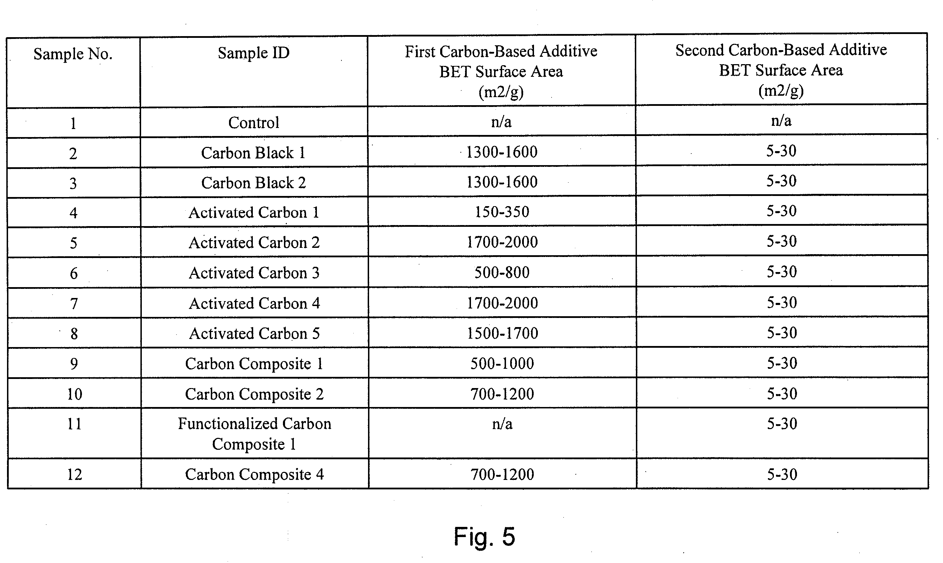

A systematic fundamental study was performed to understand the influence of carbon structure, surface area, particle size, pore size distribution, surface functionality, composite carbon particles and other properties, to identify optimum types of carbon for use in negative active material of energy storage devices to identify its role in improving the negative electrode in VRLA batteries. Figure 5 discloses a matrix for a trial group of carbon-based additives tested below. The following tests were conducted for each material tested.

### Experimental protocols

### Cell construction

A 2V prismatic cell with plate dimension of 2 in x 3 in x .01 in was used as a platform to evaluate various carbon-based additives in the study group. A 3-positive and 2-negative configuration was adopted to make the cell negative limiting. A standard advanced glass mat separator (Grammage: 307 ± 9 g/m², Density : 151 ± 9 g/m²/mm, Thickness : 2.03 mm, Compression : 20 %) and 1.255 SG sulphuric acid before formation with a target gravity of 1.29 - 1.30 was used for the study. The carbon-based additives were incorporated into the negative paste by standard paste mixing processes described above. The paste mix recipe and formation profile of the cells are disclosed in Figures 4a and 4b, respectively. The carbon paste was then pasted on to lead alloy grids, cured, and dried at elevated humidity and temperature. The dry unformed (DUF) negative paste was also tested for apparent density as well as percent PbSO₄ content.

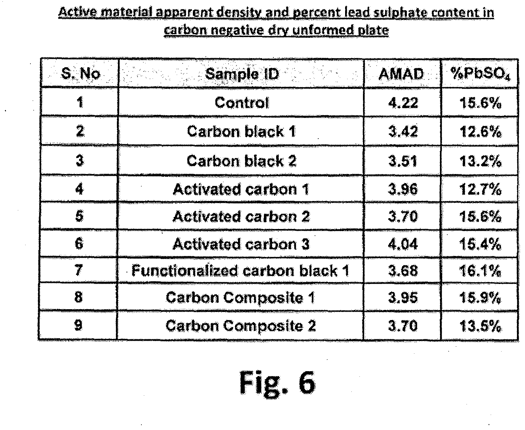

The apparent densities of the active material as well as its PbSO₄ content are inter-dependant. The NAMs were evaluated for their apparent density and the results are presented in Figure 6. All the carbon-based additive containing paste mixes had lower apparent densities than the density of the control paste mix. This result confirms the possibility of lowering total battery weight with the addition of carbon in the paste mix. Figure 6 also shows that the percent PbSO₄ content is close the target of 13 - 15 % for the recipe for all test groups studied. These results are depicted in show that the addition of additional carbon does not significantly alter the paste mixing as well as curing process for the negative plates.

The dry unformed negative paste was tested for surface area to determine the quality of the dispersion. The surface areas of NAM containing certain carbon-based additives were up to 4 times higher compared to the control mix, resulting in highest surface areas of 9.2 m²/g. Figure 7 shows the surface areas measured, as well as the theoretical surface areas calculated, for each negative mix tested.

### Discharge capacity

The discharge capacity of the cell was determined by discharging a fully charged cell at various rates - C/20, C/8, C/4, C, 2C and 5C. These tests were performed to determine the response of the cell at various discharge rates to determine a suitable application for each carbon group under study. During the discharge the cell temperature was maintained in the range of 23.9 °C (75°F) to 32.2 °C (90°F), and the final cut-off voltage was 1.75 V/cell. The discharge time was used to calculate the discharge capacity at a given discharge rate.

### Static Charge Acceptance

Static charge acceptance is defined by the ability of the cell to accept charge at a partial state of charge (SoC). The cell was initially discharged for 4 hours at C/20 rate to get the cell to 80 % SoC. At the end of the discharge, the cell was immediately placed in a cold chamber until the electrolyte temperature of a center cell reached and stabilized at -17.8 °C (0°F). With cells stabilized at -17.8 °C (0 °F), the cell was charged at a constant voltage (read at the cell terminals) of 2.40 volts. The ampere charge rate was measured and recorded at the end of 15 minutes. This rate was taken as the charge current acceptance rate.

### Charge Power

A EUCAR power assist test was performed on the cells to determine the charge and the discharge power on the cells. The test started with a rest period on a fully charged battery, followed by four current pulses for 10 seconds, with rest periods in between. The first two were 1-C pulses; the last two pulses were high current pulses of both positive and negative values. Between the third and fourth pulses, the battery was discharged at C/20 rate to reach a next SoC of 80 %. This cycle of test was repeated until the cell reached 0 % SoC. A safety voltage limit of 2.67 V on charge and 1.5 V on discharge was set for the experiment. If cells reach this safety limit during the high current pulse step, the cell switched to a constant voltage charge or discharge mode with voltages of 2.6 V/1.5 V, respectively. The cell power recorded at the end of 5 seconds during high current charge or discharge step was normalized by total cell weight to calculate power densities.

### Discharge Power

A EUCAR power assist test was performed on the cells to determine the charge and the discharge power on the cells. The test started with a rest period on a fully charged battery, followed by four current pulses for 10 seconds, with rest periods in between. The first two were 1-C pulses; the last two pulses were high current pulses of both positive and negative values. Between the third and fourth pulses, the battery was discharged at C/20 rate to reach a next SoC of 80 %. This cycle of test was repeated until the cell reached 0 % SoC. A safety voltage limit of 2.67 V on charge and 1.5 V on discharge was set for the experiment. If cells reach this safety limit during the high current pulse step, the cell switched to a constant voltage charge or discharge mode with voltages of 2.6 V/1.5 V, respectively. The cell power recorded at the end of 5 seconds during high current charge or discharge step was normalized by total cell weight to calculate power densities.

### HRPSoC Life Cycle Testing

HRPSoC cycle life test is performed to simulate performance of the batteries in actual use. The first step in this cycling profile was to discharge at 1C rate to 60% SoC. After that, the cells were subjected to cycling according to the following schedule: charge at 2C rate for 60 s, rest for 10 s, discharge at 2C rate for 60 s, rest for 10 s. The simulated HRPSoC test was stopped either when the end-of-charge voltage reached 2.8 V or when the end-of-discharge voltage decreased to 0.5 V. These pre-set limits determine the end-of-life of the cells within the first cycle-set of the test.

### Paste Shedding Testing

Control Cells and Cells comprising carbon-based additives were built in flooded configuration using a lead sheet as a positive plate and formed continuously using a constant current of 2 A (10X more Ah input over formation). When control positives were used instead of lead sheet, constant current formation causes positive plate to fail before the negatives. In order to make the negative electrode to be a limiting electrode and differentiate various carbon groups, lead sheet was used as positive electrode. The negative plates were photographed every 24 hours to determine paste shedding and changes in plate surface morphology. Table 1 below describes some carbon-based additives tested. The reduction of paste shedding for each sample tested is observed in Figure 8.

**Table 1:**

| **Sample Type** | **BET Surface Area (m²/g)** |
|---|---|
| Graphite 1 | 5-30 |
| Graphite 2 | 1-20 |
| Activated carbon 3 | 500-800 |
| Carbon black 2 | 1300-1600 |
| Graphite 3 | 200-500 |

### EXAMPLE 1 - This example is a reference example, not according to the scope of the appended claims.

As depicted in Figure 5 Sample Nos. 2 and 3 comprise two carbon blacks obtained from a well-known U.S. carbon black supplier, which added to negative active material along with commercial battery grade expanded graphite ABG 1010 from Superior Graphite. The samples were tested against a control sample (Sample No. 1) using the above experimental protocols to determine the influence of carbon structure and surface area on battery performance.

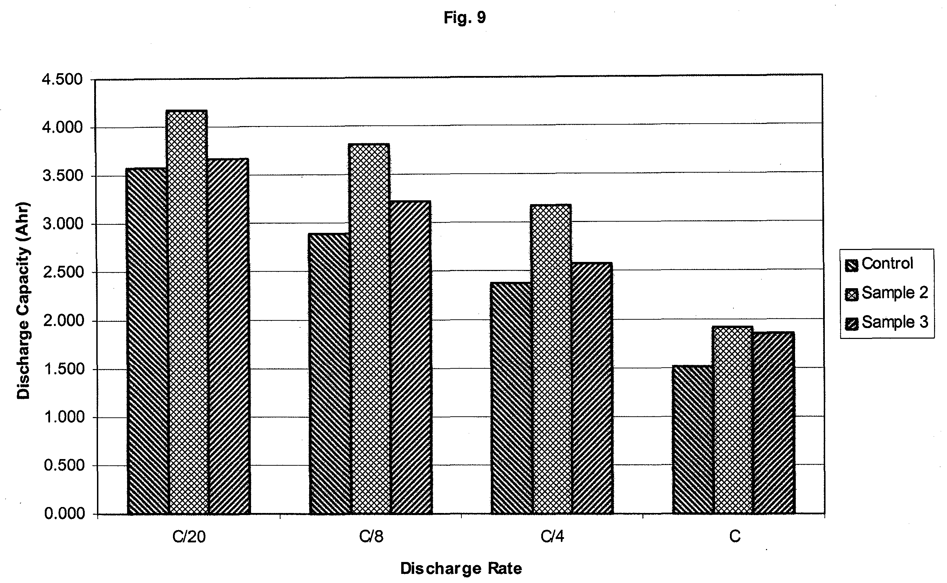

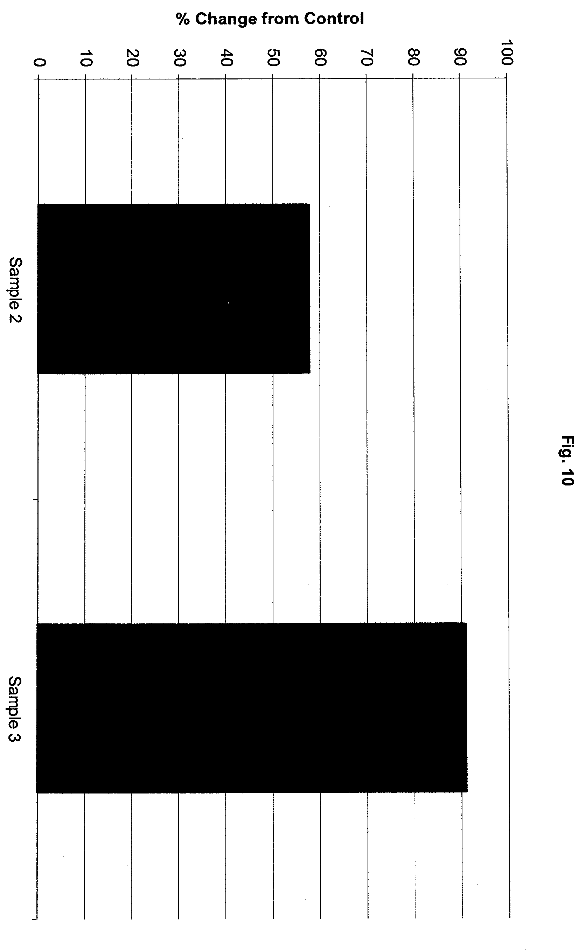

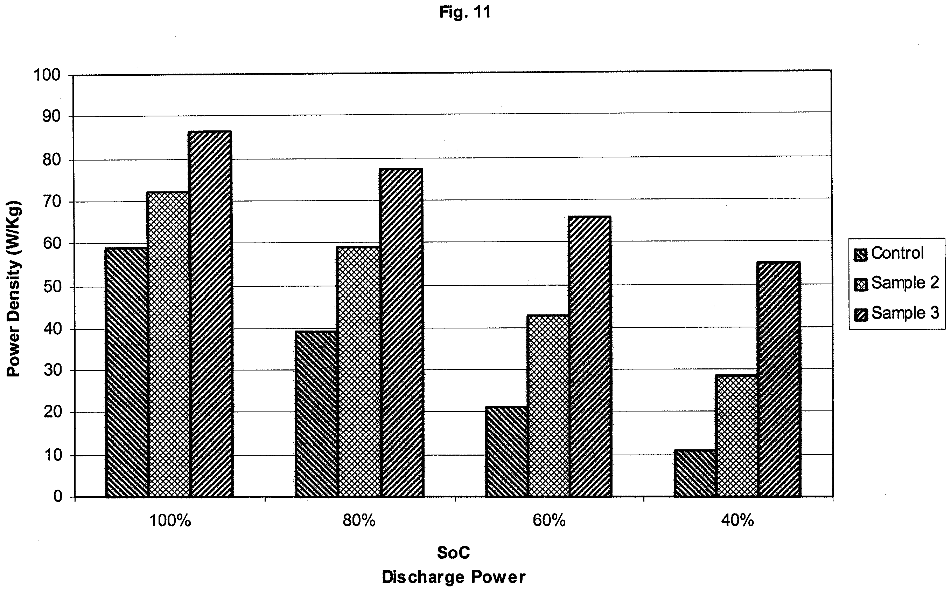

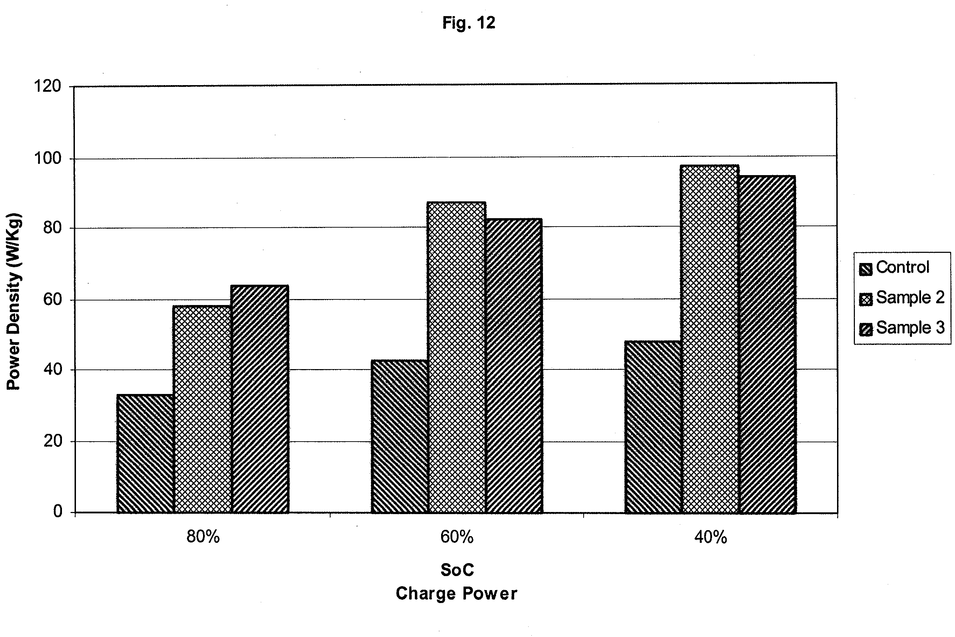

The testing results are depicted in Tables 2-5 below and FIGS. 9-12.

**Table 2: Discharge Capacity**

| **Sample No.** | **Sample ID** | **C/20 (Ahr)** | **C/8 (Ahr)** | **C/4 (Ahr)** | **C (Ahr)** |
|---|---|---|---|---|---|
| **1** | **Control** | 3.58 | 2.89 | 2.37 | 1.52 |
| **2** | **Carbon Black 1** | 4.17 | 3.82 | 3.17 | 1.93 |
| **3** | **Carbon Black 2** | 3.67 | 3.22 | 2.58 | 1.86 |

**Table 3: Static Charge Acceptance**

| **Sample No.** | **Sample ID** | **Current at 15 min (A)** | **% Change compared to Control** |
|---|---|---|---|
| **1** | **Control** | 0.078 | 0 |
| **2** | **Carbon Black 1** | 0.123 | 58 |
| **3** | **Carbon Black 2** | 0.149 | 91 |

**Table 4: Power Density**

| Discharge Power | | | | | |
|---|---|---|---|---|---|
| **Sample No.** | **Sample ID** | **100% SoC (W/Kg)** | **80% SoC (W/Kg)** | **60% SoC (W/Kg)** | **40% Soc (W/Kg)** |
| **1** | **Control** | 58.8 | 39.3 | 21.3 | 11.07 |
| **2** | **Carbon Black 1** | 71.98 | 58.82 | 42.75 | 28.60 |
| **3** | **Carbon Black 2** | 86.39 | 77.15 | 65.77 | 54.94 |

| Charge Power | | | | | |
|---|---|---|---|---|---|
| **Sample No.** | **Sample ID** | **80% SoC (W/Kg)** | **60% SoC (W/Kg)** | **40% Soc (W/Kg)** | |
| **1** | **Control** | 32.95 | 42.67 | 48.01 | |
| **2** | **Carbon Black 1** | 57.88 | 87.22 | 97.27 | |
| **3** | **Carbon Black 2** | 63.89 | 82.36 | 94.12 | |

As shown by this data, carbon containing negative plates show a small increase in discharge capacities possibly due to increased paste utilization. The carbon groups also show an increased static charge acceptance due to higher electronic conductivity of carbon compared to PbSO₄ crystals. Test cells with low structured carbon-based additives showed an increased charge acceptance, possibly due to better compaction in the paste and higher electronic conductivity. All carbon groups showed an increase in power densities.

### EXAMPLE 2 - This example is a reference example, not according to the scope of the appended claims.

As depicted in Figure 5 Sample Nos. 4-8 comprise activated carbons from a well-known U.S. activated carbon supplier were chosen to explore the influence that the particle size and the pore size distribution of carbons have on the performance of lead-acid batteries. These samples were used in combination with commercial battery grade expanded graphite ABG 1010 from Superior Graphite.

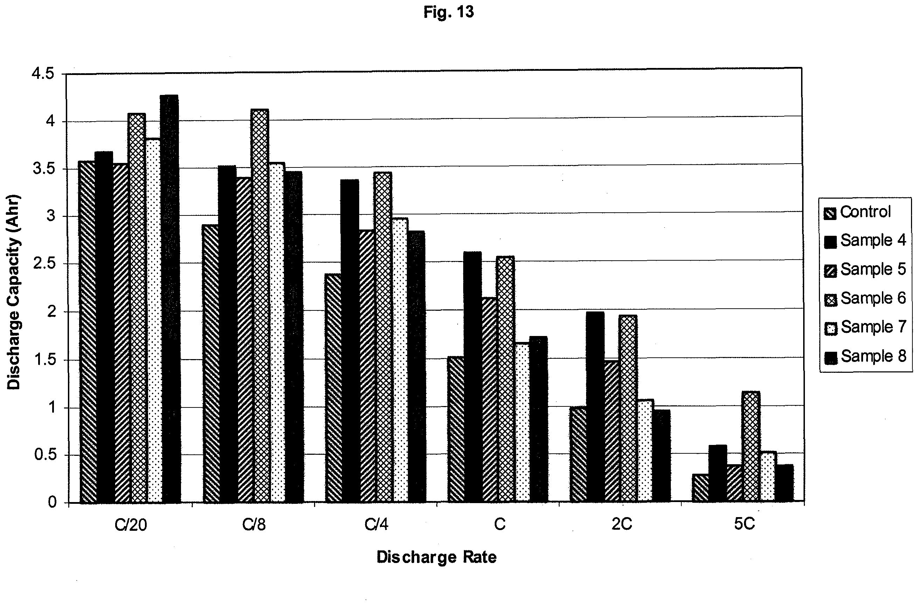

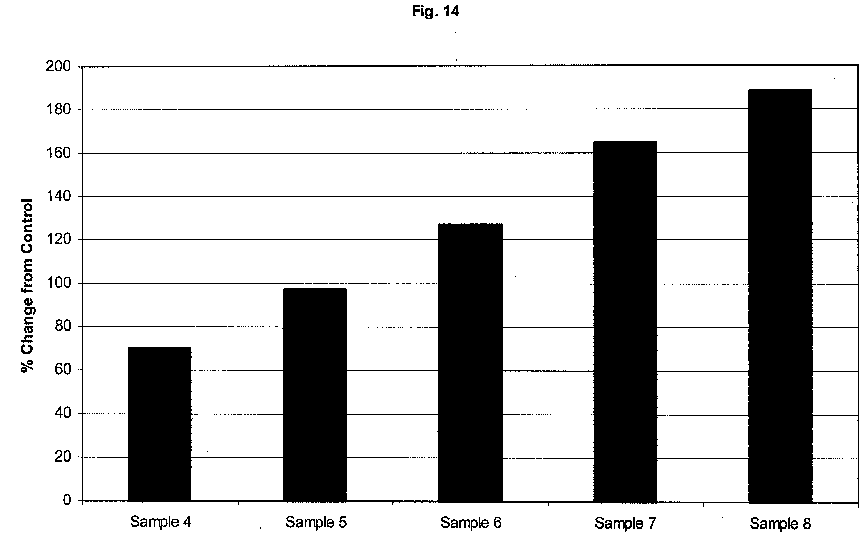

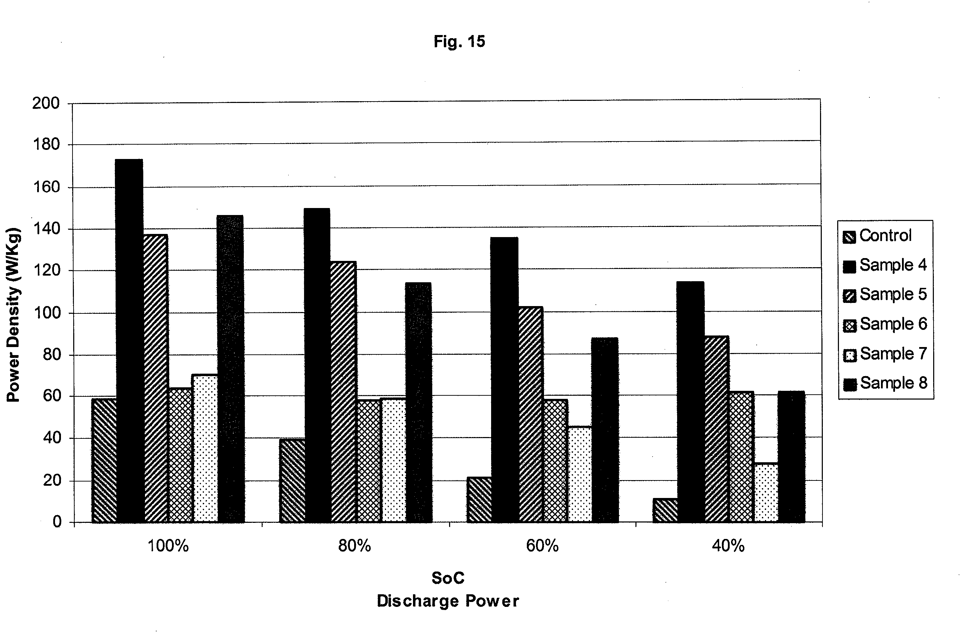

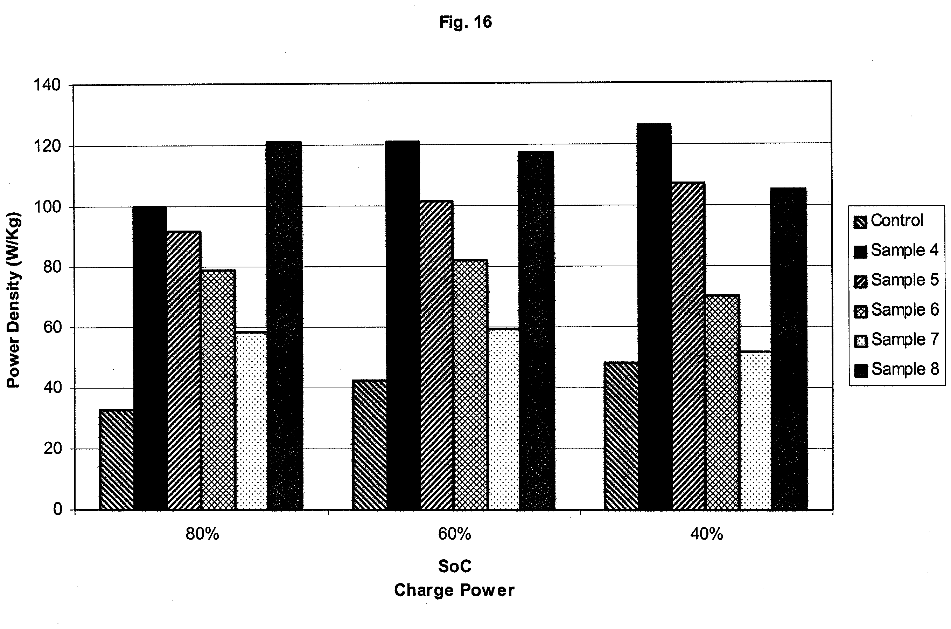

The testing results are depicted in Tables 5-7 below and FIGS. 13-16.

**Table 5: Discharge Capacity**

| **Sample No.** | **Sample ID** | **C/20 (Ahr)** | **C/8 (Ahr)** | **C/4 (Ahr)** | **C (Ahr)** | **2C (Ahr)** | **5C (Ahr)** |
|---|---|---|---|---|---|---|---|
| **1** | **Control** | 3.58 | 2.89 | 2.37 | 1.52 | 0.99 | 0.28 |
| **4** | **Activated Carbon 1** | 3.67 | 3.52 | 3.36 | 2.60 | 1.97 | 0.57 |
| **5** | **Activated Carbon 2** | 3.54 | 3.39 | 2.83 | 2.12 | 1.46 | 0.38 |
| **6** | **Activated Carbon 3** | 4.07 | 4.11 | 3.44 | 2.55 | 1.93 | 1.14 |
| **7** | **Activated Carbon 4** | 3.82 | 3.54 | 2.95 | 1.66 | 1.06 | 0.52 |
| **8** | **Activated Carbon 5** | 4.27 | 3.46 | 2.81 | 1.71 | 0.95 | 0.37 |

**Table 6: Static Charge Acceptance**

| **Sample No.** | **Sample ID** | **Current at 15 min (A)** | **% Change compared to Control** |
|---|---|---|---|
| **1** | **Control** | 0.078 | 0 |
| **4** | **Activated Carbon 1** | 0.133 | 71 |
| **5** | **Activated Carbon 2** | 0.154 | 97 |
| **6** | **Activated Carbon 3** | 0.177 | 127 |
| **7** | **Activated Carbon 4** | 0.207 | 165 |
| **8** | **Activated Carbon 5** | 0.225 | 188 |

**Table 7: Power Density**

| Discharge Power | | | | | |
|---|---|---|---|---|---|
| **Sample No.** | **Sample ID** | **100% SoC (W/Kg)** | **80% SoC (W/Kg)** | **60% SoC (W/Kg)** | **40% Soc (W/Kg)** |
| **1** | **Control** | 58.8 | 39.3 | 21.3 | 11.07 |
| **4** | **Activated Carbon 1** | 172.58 | 148.77 | 134.62 | 113.91 |
| **5** | **Activated Carbon 2** | 136.77 | 123.80 | 101.70 | 87.68 |
| **6** | **Activated Carbon 3** | 63.55 | 57.69 | 57.90 | 61.76 |
| **7** | **Activated Carbon 4** | 70.67 | 58.74 | 45.59 | 27.71 |
| **8** | **Activated Carbon 5** | 145.89 | 113.62 | 87.11 | 61.26 |

| Charge Power | | | | | |
|---|---|---|---|---|---|
| **Sample No.** | **Sample ID** | **80% SoC (W/Kg)** | **60% SoC (W/Kg)** | **40% Soc (W/Kg)** | |
| **1** | **Control** | 32.95 | 42.67 | 48.01 | |
| **4** | **Activated Carbon 1** | 100.06 | 121.12 | 126.39 | |
| **5** | **Activated Carbon 2** | 92.03 | 101.67 | 107.01 | |
| **6** | **Activated Carbon 3** | 79.14 | 82.24 | 70.42 | |
| **7** | **Activated Carbon 4** | 58.32 | 59.39 | 51.90 | |
| **8** | **Activated Carbon 5** | 121.03 | 117.32 | 105.06 | |

As shown by this data, the activated carbons demonstrate improved charge acceptance, power density, NAM surface area and paste utilization. Carbon containing negative plates show a small increase in discharge capacities for a few activated carbon groups possibly due to increased paste utilization. All activated groups also show an increased static charge acceptance due to increased electronic conductivity of the matrix with carbon addition. Mesoporous carbon-based additives showed highest discharge capacity, charge acceptance and power densities increase from the control groups. The presence of larger meso pores enables the electrolyte ions to freely move in and out of the electrode pores with least resistance, resulting in improved performance in power density tests as well as high rate discharges. Carbon-based additives with a mixture of micro and meso pores showed an increased power densities, due to contribution from meso pores while carbon-based additives with primarily micropores showed improvements in charge acceptance due to higher surface area.

### EXAMPLE 3 - This example is a reference example, not according to the scope of the appended claims.

As depicted in Figure 5, Sample Nos. 9-12 comprise carbon-based additives suitable for use in the present invention containing composite components and/or functionalized carbon-based additives, to explore the influence that composite components have on the performance of lead-acid batteries. These samples were used in combination with commercial battery grade expanded graphite ABG 1010 from Superior Graphite.

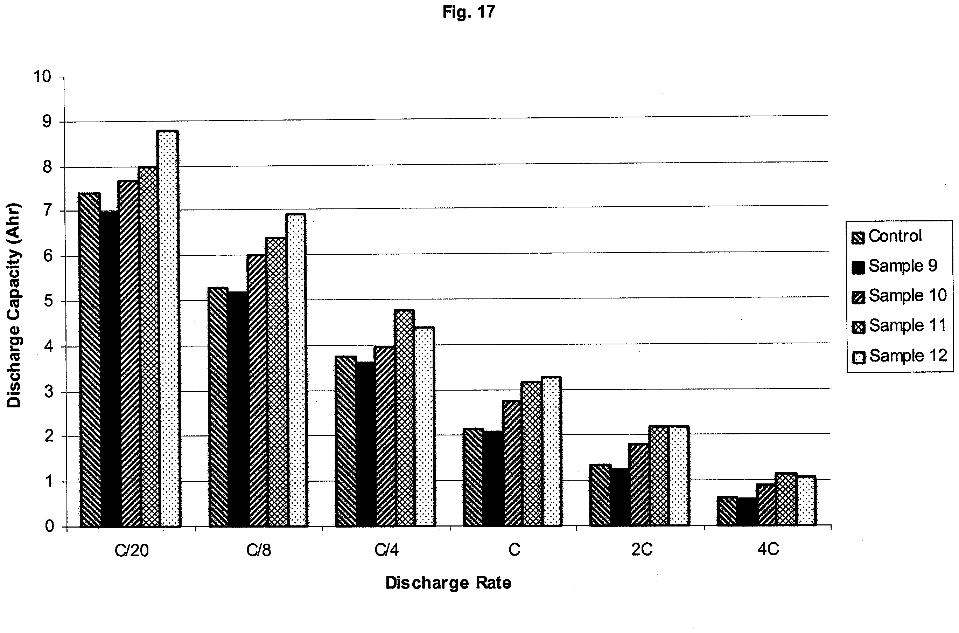

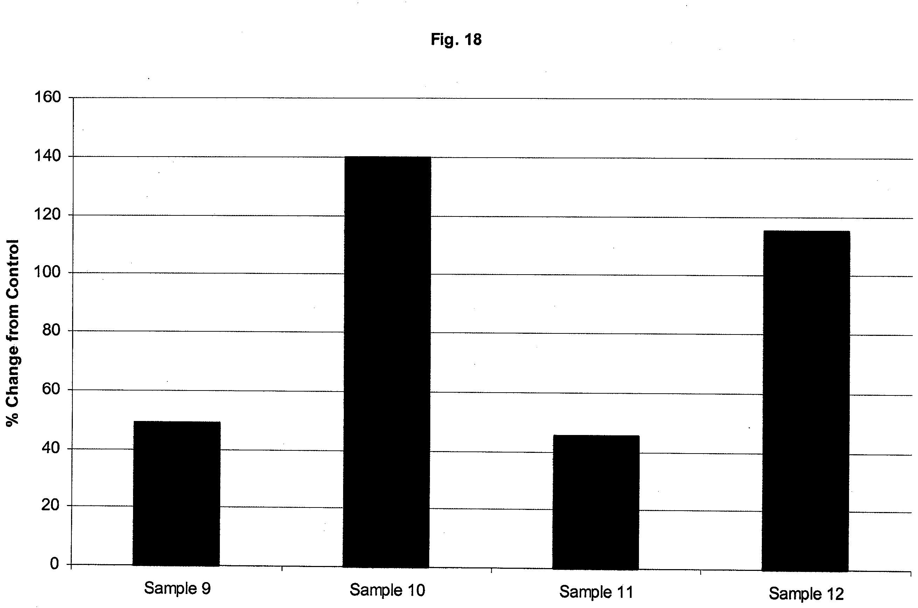

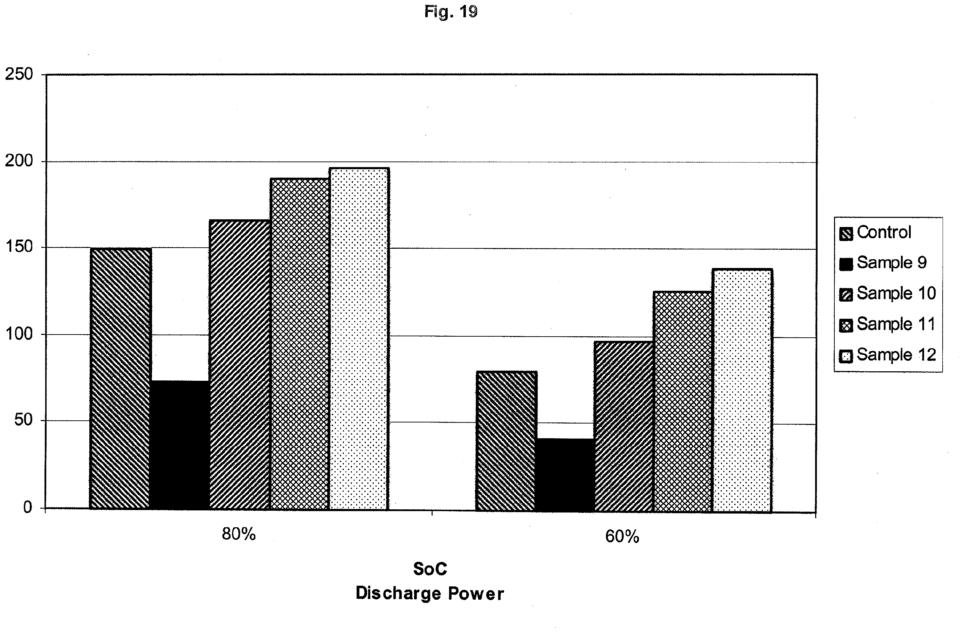

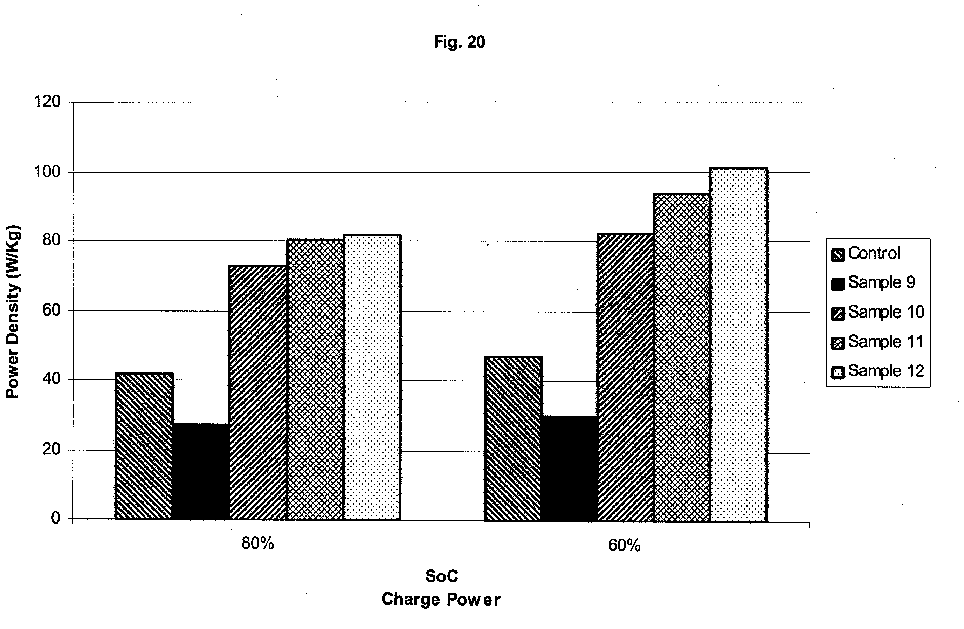

The testing results are depicted in Tables 8-10 below and FIGS. 17-20

**Table 8: Discharge Capacity**

| **Sample No.** | **Sample ID** | **C/20 (Ahr)** | **C/8 (Ahr)** | **C/4 (Ahr)** | **C (Ahr)** | **2C (Ahr)** | **4C (Ahr)** |
|---|---|---|---|---|---|---|---|
| **1** | **Control** | 7.38 | 5.29 | 3.75 | 2.16 | 1.34 | 0.61 |
| **9** | **Carbon Composite 1** | 6.98 | 5.19 | 3.62 | 2.09 | 1.26 | 0.58 |
| **10** | **Carbon Composite 2** | 7.67 | 6.02 | 3.95 | 2.76 | 1.82 | 0.90 |
| **11** | **Functionalized Carbon Composite 1** | 8.00 | 6.39 | 4.74 | 3.16 | 2.18 | 1.15 |
| **12** | **Carbon Composite 4** | 8.80 | 6.90 | 4.38 | 3.25 | 2.19 | 1.08 |

**Table 9: Static Charge Acceptance**

| **Sample No.** | **Sample ID** | **Current at 15 min (A)** | **% Change compared to Control** |
|---|---|---|---|
| **1** | **Control** | 0.176 | 0 |
| **9** | **Carbon Composite 1** | 0.262 | 49 |
| **10** | **Carbon Composite 2** | 0.423 | 140 |
| **11** | **Functionalized Carbon Composite 1** | 0.256 | 45 |
| **12** | **Carbon Composite 4** | 0.379 | 115 |

**Table 10: Power Density**

| Discharge Power | | | |
|---|---|---|---|
| **Sample No.** | **Sample ID** | **80% SoC (W/Kg)** | **60% SoC (W/Kg)** |
| **1** | **Control** | 149.43 | 79.37 |
| **9** | **Carbon Composite 1** | 73.17 | 41.55 |
| **10** | **Carbon Composite 2** | 165.92 | 96.803 |
| **11** | **Functionalized Carbon Composite 1** | 189.70 | 125.06 |
| **12** | **Carbon Composite 4** | 196.42 | 137.87 |

| Charge Power | | | |
|---|---|---|---|
| **Sample No.** | **Sample ID** | **80% SoC (W/Kg)** | **60% SoC (W/Kg)** |
| **1** | **Control** | 41.54 | 47.22 |
| **9** | **Carbon Composite 1** | 27.38 | 29.84 |
| **10** | **Carbon Composite 2** | 73.05 | 82.11 |
| **11** | **Functionalized Carbon Composite 1** | 80.49 | 93.63 |
| **12** | **Carbon Composite 4** | 81.81 | 101.30 |

As shown by this data, the composite particles demonstrate improved charge acceptance, power density, NAM surface area and paste utilization. An increased static charge acceptance was observed due to increased surface area and electronic conductivity of the matrix with carbon addition. The carbons with lower conductivity and surface area showed lower charge acceptance and power characteristics. The conductive carbon part of the composite particle increases the power characteristic of the battery, increase surface area improves the static charge acceptance and while hygroscopic silica part of the composite particle improve the discharge capacities.

The individual components shown in outline or designated by blocks in the attached Drawings are all well-known in the battery arts, and their specific construction and operation are not critical to the operation or best mode for carrying out the invention.

While the present invention has been described with respect to what is presently considered to be the preferred embodiments, it is to be understood that the invention is not limited to the disclosed embodiments. To the contrary, the invention is intended to cover various modifications and equivalent arrangements included within the scope of the appended claims.

## Claims

1. An energy storage device (600; 700), comprising:
an electrode comprising lead (608,614; 708);
an electrode comprising lead dioxide (604, 612; 704);
a separator (606; 706) between the electrode comprising lead and the electrode comprising lead dioxide;
an aqueous electrolyte solution containing sulfuric acid;
a first carbon-based additive having a surface area from 100 m²/g to 2000 m²/g as measured according to the BET method, wherein the first carbon-based additive is functionalized with -SO3 or -COOH and wherein the first carbon-based additive comprises both microporous pore widths less than 2 nanometers and mesoporous pore widths between 2 and 50 nanometers; and
a second carbon-based additive having a surface area from 3 m²/g to 50 m²/g as measured according to the BET method.

2. The energy storage device according to Claim 1, wherein the first carbon-based additive has a surface area from 800 m²/g to 1300 m²/g as measured according to the BET method.

3. The energy storage device of Claim 1 or 2, wherein the energy storage device is a lead-acid battery (600; 700).

4. The energy storage device according to any of Claims 1-3, wherein the lead-acid battery comprises a dry unformed plate surface area of 5 m²/g to 10 m²/g as measured according to the BET method.

5. The energy storage device according to any of Claims 1-4, wherein the part of the second carbon-based additive is from 0.5 %wt. to 3 %wt.

6. A method of reducing shedding of an active material in a lead-acid battery (600; 700) comprising the steps of:
a. Providing a negative active material suitable for use in a lead-acid battery;
b. Adding to the active material a first carbon-based additive having a surface area from 100 m²/g to 2000 m²/g as measured according to the BET method and from 0.5 %wt. to 3 %wt. of a second carbon-based additive having a surface area from 3 to 50 m²/g as measured according to the BET method and, wherein the first carbon-based additive is functionalized with -SO3 or -COOH and wherein the first carbon-based additive comprises both microporous pore widths less than 2 nanometers and mesoporous pore widths between 2 and 50 nanometers.;
c. Applying the resulting paste to a cell;
d. Curing the paste;
e. Over forming the cell assembly using a constant current.

## Patentansprüche

1. Energiespeichervorrichtung (600; 700), umfassend:
eine Elektrode, die Blei (608, 614; 708) umfasst;
eine Elektrode, die Bleidioxid (604, 612; 704) umfasst;
einen Separator (606; 706) zwischen der Elektrode, die Blei umfasst, und der Elektrode, die Bleidioxid umfasst;
eine wässrige Elektrolytlösung, die Schwefelsäure enthält;
eine erstes Additiv auf Kohlenstoffbasis mit einer Oberfläche von 100 m²/g bis 2000 m²/g, gemessen gemäß der BET-Methode, wobei das erste Additiv auf Kohlenstoffbasismit -SO3 oder -COOH funktionalisiert ist, und wobei das erste Additiv auf Kohlenstoffbasis sowohl mikroporöse Porenbreiten von weniger als 2 Nanometern als auch mesoporöse Porenbreiten zwischen 2 und 50 Nanometern umfasst; und
ein zweites Additiv auf Kohlenstoffbasis mit einer Oberfläche von 3 m²/g bis 50 m²/g, gemessen gemäß der BET-Methode.

2. Energiespeichervorrichtung nach Anspruch 1, wobei das erste Additiv auf Kohlenstoffbasis eine Oberfläche von 800 m²/g bis 1300 m²/g aufweist, gemessen gemäß der BET-Methode.

3. Energiespeichervorrichtung nach Anspruch 1 oder 2, wobei die Energiespeichervorrichtung eine Blei-Säure-Batterie (600; 700) ist.

4. Energiespeichervorrichtung nach einem der Ansprüche 1 bis 3, wobei die Blei-Säure-batterie eine trockene ungeformte Plattenoberfläche von 5 m²/g bis 10 m²/g aufweist, gemessen gemäß der BET-Methode.

5. Energiespeichervorrichtung nach einem der Ansprüche 1 bis 4, wobei der Anteil des zweiten Additivs auf Kohlenstoffbasis zwischen 0,5 Gew.-% und 3 Gew.-% liegt.

6. Verfahren zur Reduzierung der Abschlammung eines Aktivmaterials in einer Blei-Säure-Batterie (600; 700), die folgenden Schritte umfassend:
a. Bereitstellen eines negativen Aktivmaterials, das sich zur Verwendung in einer Blei-Säure-Batterie eignet;
b. Zugabe zu dem Aktivmaterial eines ersten Additivs auf Kohlenstoffbasis mit einer Oberfläche von 100 m²/g bis 2000 m²/g, gemessen gemäß der BET-Methode, und zwischen 0,5 Gew.-% und 3 Gew.-% eines zweiten Additivs mit einer Oberfläche von 3 bis 50 m²/g, gemessen gemäß der BET-Methode, und wobei das erste Additiv auf Kohlenstoffbasis funktionalisiert ist mit -SO3 oder - COOH, und wobei das erste Additiv auf Kohlenstoffbasis sowohl mikroporöse Porenbreiten von weniger als 2 Nanometern als auch mesoporöse Porenbreiten zwischen 2 und 50 Nanometern umfasst;
c. Auftragen der resultierenden Paste auf eine Zelle;
d. Härten der Paste;
e. Bilden der Zelleneinheit unter Verwendung eines konstanten Stroms.

## Revendications

1. Dispositif de stockage d'énergie (600 ; 700) comprenant :
une électrode comprenant du plomb (608, 614 ; 708) ;
une électrode comprenant du dioxyde de plomb (604, 612 ; 704) ;
un séparateur (606 ; 706) entre l'électrode comprenant du plomb et l'électrode comprenant du dioxyde de plomb ;
une solution électrolytique aqueuse contenant de l'acide sulfurique ;
un premier additif à base de carbone ayant une surface spécifique comprise entre 100 m²/g et 2 000 m²/g telle que mesurée selon la méthode BET, le premier additif à base de carbone étant fonctionnalisé avec -SO3 ou -COOH et le premier additif à base de carbone comprenant à la fois des largeurs de pores microporeux inférieures à 2 nanomètres et des largeurs de pores mésoporeux comprises entre 2 et 50 nanomètres ; et
un second additif à base de carbone ayant une surface comprise entre 3 m²/g et 50 m²/g, mesurée selon la méthode BET.

2. Dispositif de stockage d'énergie selon la revendication 1, le premier additif à base de carbone ayant une surface comprise entre 800 m²/g et 1 300 m²/g, mesurée selon la méthode BET.

3. Dispositif de stockage d'énergie selon la revendication 1 ou 2, le dispositif de stockage d'énergie étant une batterie au plomb-acide (600 ; 700).

4. Dispositif de stockage d'énergie selon l'une quelconque des revendications 1 à 3, la batterie au plomb-acide comprenant une surface de plaque sèche non formée comprise entre 5 m²/g et 10 m²/g, mesurée selon la méthode BET.

5. Dispositif de stockage d'énergie selon l'une quelconque des revendications 1 à 4, la part du second additif à base de carbone étant comprise entre 0,5 % en poids et 3 % en poids.

6. Procédé de réduction du délestage d'une matière active dans une batterie au plomb-acide (600 ; 700) comprenant les étapes consistant à :
a. fournir un matériau actif négatif pouvant être utilisé dans une batterie au plomb-acide ;
b. ajouter à la matière active un premier additif à base de carbone ayant une surface comprise entre 100 m²/g et 2 000 m²/g telle que mesurée selon la méthode BET et entre 0,5 % en poids et 3 % en poids d'un second additif à base de carbone ayant une surface de 3 à 50 m²/g telle que mesurée selon la méthode BET et, le premier additif à base de carbone étant fonctionnalisé avec -SO3 ou -COOH et le premier additif à base de carbone comprenant à la fois des largeurs de pores microporeux inférieures à 2 nanomètres et des largeurs de pores mésoporeux comprises entre 2 et
50 nanomètres ;
c. appliquer la pâte résultante à une pile ;
d. faire durcir la pâte ;
e. surformer l'assemblage de la pile à l'aide d'un courant constant.
